# EUROPEAN PATENT SPECIFICATION

(11) **EP 4 243 598 B1**
(45) Date of publication and mention of the grant of the patent: **20.11.2024**
(21) Application number: 21807097.7
(22) Date of filing: 09.11.2021
(51) Int. Cl.: A01G 7/04, C12N 13/00

(54) **DEVICE AND METHOD FOR DIRECTING PLANT DEVELOPMENT**
VORRICHTUNG UND VERFAHREN ZUM LEITEN DER PFLANZENENTWICKLUNG
DISPOSITIF ET PROCÉDÉ POUR DIRIGER LE DÉVELOPPEMENT D'UNE PLANTE

(30) Priority: 13.11.2020 EP 20207388
(43) Date of publication of application: 20.09.2023
(73) Proprietor: Parxtra Holding B.V., 2295 RV Kwintsheul (NL)
(72) Inventor: VAN DER ENDE, Marcus, 2295 RV Kwintsheul (NL)
(74) Representative: Ringeling, Patricia Louise
(86) International application number: PCT/EP2021/081143
(87) International publication number: WO 2022/101219

(56) References cited:
- EP-A1- 2 243 351
- WO-A1-2020/161942
- WO-A1-2021/030161
- RU-C1- 2 700 623

## Description

### Field of the Invention

The present invention relates to a device and method for directing plant development, in particular to direct growth, flowering or seed development.

### Background of the invention

Breeders and farmers have always been trying to stimulate plant growth. With the ever increasing world population, there is a growing need to increase crop yield and to look for more efficient ways of providing food. Several strategies have been applied to stimulate plant growth. One widely-used strategy is mixing inorganic fertilizer through the soil to provide plants with all the necessary nutrients and elements, in particular potassium, nitrogen and phosphorus. Artificial fertilizers provide the plants with minerals, but contribute little to soil improvement and are therefore a continuously returning expense. Another widely-used strategy is to grow plants, in particularly, flowers and vegetables, in controlled environments, for example in greenhouses. In greenhouses, heating, cooling, humidity and lighting may be controlled and steered towards more production. At the same time, greenhouse farmers are trying to decrease the use of water and fossil fuels. Methods for stimulating plant growth which do not contribute to the environmental foot print are therefore desirable.

Stimulating plant growth by electromagnetic energy has been suggested as an alternative to fertilizers. EP 2 243 351 discloses a growth accelerator operating at electric field strength as high as 20-200V/m at the site of the radiator accelerator. To accelerate growth, plants have to be placed in the high electric field between the two emitters of the accelerator This is not very practical since valuable space is occupied by the accelerator, high voltages are used and there is little flexibility in the positioning of the plants. This methods only accelerates growth, but does not allow for influencing specific aspects of plant development, such as root development or flower formation. WO2020/161942 discloses a growth promotion method and system, where plants have to be positioned between two electrodes to be treated with a frequency in the range of 0.5-1000 MHz. This allows for little flexibility in positioning, which limits practical use and scalability. Valuable plant space is taken up by such devices and electrodes between plants are rather avoided in greenhouses, because water is applied regularly and because of the moist environment. RU 2 700 623 C1 relates to agriculture, namely to means of stimulating plant development by means of electromagnetic action. It discloses a hexacopter with a replaceable battery, a power supply unit, a navigation system for movement in space, an on-board controller connected by a radio channel with a remote control, and a working member of electromagnetic irradiation of plants, which includes a radio transmitter and an emitter. The working member is mounted on the lower side of the hexaccopter frame between the landing gear racks and is made in the form of a zigzag antenna with a reflector. The antenna is connected to the output of the power amplifier of the radio transmitter in the decimeter range with amplitude manipulation of carrier frequency in the ultralow-frequency range.

It would be desirable to have a reliable and inexpensive method which does not have the above-mentioned drawbacks and which is scalable and easy to implement.

### Short description of the figures

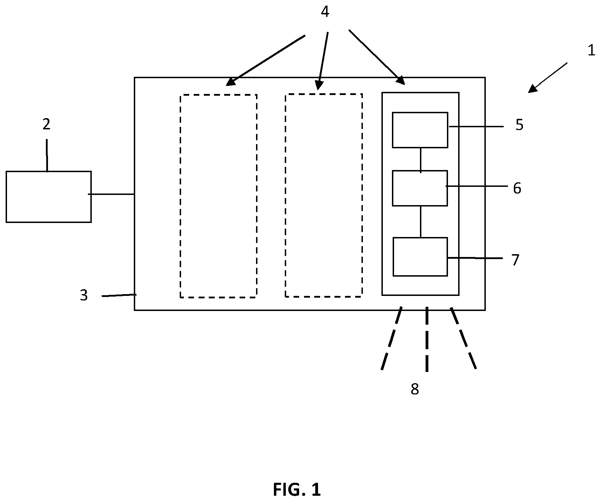

**Figure 1** Schematic representation of one embodiment of a device according to the invention. The dashed lines indicating space for more modules 4.

### Detailed description of the invention

The present invention relates to a method for directing plant development, the method comprising applying radio wave energy in the range of 1 MHz to 15 MHz to a plant from a device having an integrated antenna. This has many practical, social and environmental advantages. The invention is defined by the claims.

This method allows for specifically directing certain aspects of plant development, such as root development or flower formation. At the same time, less lighting and water is required to obtain the same yield. Yet another advantage is that less heating and cooling is required, and still high temperature behaviour may be achieved. Since less lighting, water, cooling and heating is required, overall less energy is required if the device and method according to the invention are used. Yet another advantage is that less disease control agents are required, because plants are healthier and less prone to disease. A further advantage is that the use of growth regulators or growth retarders to keep plants compact and at their peak for longer time is not required anymore, resulting in substantial savings and in a reduction in the need to use environmentally unfriendly compounds. Therefore the method according to the invention is more economical, energy saving and has a smaller environmental carbon foot print than existing methods. Yet another advantage is that the method and device allow for production in areas where production has been difficult so far, leading to low yields, for example due to water shortage or remoteness. The present invention therefore also has a social impact, in particular when applied to stimulate the germination of seeds or to improve the yield of food crops. A further advantage is that the compact device according to the invention allows for maximal flexibility in the positioning of the plants relative to the device. This is important for user friendliness, practical applicability and scalability.

In the present context, the term "plant" refers to a unicellular or multicellular eukaryotic photosynthetic organism. In the present context, the term "plant" includes trees and algae. The term includes all the members of the *Archaeplastida* group, also referred to as the Kingdom of Plantae in its broadest form. In one embodiment, the plant is selected from the clades *Viridiplantae* and *Rhodoplantae.* In another embodiment, the plant is selected from the clades *Chlorobionta* and *Streptobionta.* In another embodiment, the plant is selected from the *Embryophyta* group, such as the *Bryophyta* and *Trachyophyta.* In another embodiment, the plant is selected from the *Spermatophyta*, such as members of the *Angiosperms* and the Gymnosperms. In one embodiment, the plant belongs to the monocotyledons or the dicotyledons. In yet another embodiment, the plant is selected from the *Cycadophyta*, *Ginkgophyta, Gnetophyta* or *Pinophyta* division. In another embodiment, the plant is a member of the *Alliaceae, Apiaceae, Araceae, Asparagaceae, Asphodelaceae, Asteraceae, Araucariaceae, Brassicaceae, Bromeliaceae, Bromelioideae, Buxaceae, Cichorioideae, Coniferae, Cucurbitaceae, Fabaceae, Gentianaceae, Iridaceae, Leguminosae, Liliaceae, Marantaceae, Marasmiaceae, Orchidaceae, Pleurotaceae, Pinaceae, Poaceae,* such as members of the subfamilies *Bambusoideae* or *Panicoideae, Rosaceae, Rutaceae, Solanaceae,* Taxaceae, *Tuberacea, Vandeae, Vitacea* or *Xanthorrhoeaceae* family.

The plant may be a species of the genus *Alchemilla, Allium, Aloe, Alstroemeria, Anthurium, Argyranthemum, Avena, Begonia, Brassica, Bromelia, Buxus, Calathea, Campanula, Capsicum, Cattleya, Cichorium, Citrus, Chamaecyparis, Chrysanthemum, Clematis, Cucumis, Cyclamen, Cydonia, Cymbidium, Cynodon, Dianthus, Dracaena, Eriobotrya, Euphorbia, Eustoma, Ficus, Fragaria, Fuchsia, Gaultheria, Gerbera, Glycine, Gypsophilia, Hedera, Helianthus, Hordeum, Hyacinthus, Hydrangea, Hippeastrum, Iris, Kalanchoë, Lactuca, Lathyrus, Lavendula, Lilium, Limonium, Malus, Mandevilla, Oryza, Osteospermum, Paeonia, Panicum, Pelargonium, Petunia, Phalaenopsis, Phaseolus, Pinus, Pisum, Platycodon, Prunus, Pyrus, Ranunculuas,Rhododendron, Rosa, Rubus, Ruta, Secale, Skimmia, Solanum, Sorbus, Sorghum, Spathiphyllum, Trifolium, Triticum, Tulipa, Vanda, Vicia, Viola, Vitis, Zamioculcas* or *Zea.*

In one embodiment, the plant is of the species *Allium ampeloprasum, Allium ascalonicum, Allium cepa, Allium schoenoprasum* , *Allium sativa, Aloe vera, Capsicum annuum, Cichorium endivia, Citrus aurantifolis, Citrus maxima, Citrus medica, Citrus bergamia, Citrus paradis, Citrus reticulata, Citrus sinensis, Cucumis sativus, Cucumis melo, Cucurbita pepo, Eustoma russellianum, Lactuca sativa, Phaseolus vulgaris, Pisum sativum, Solanum lycopersicum, Solanum tuberosum, Triticum* aestivum, *Vitis vinifer or Zea mays.*

In another embodiment, the plant is selected from the group consisting of *Ananas, Anthurium, Bromelia, Cichorium, Cynodon, Ficus, Freesia,* and *Lactuca,* In yet another embodiment, the plant is selected from the group consisting of *Ananas comosum, Anthurium, Bromelia Vriesea, Bromelia Vriesea Astrid, Bromelia Vriesea Intenso, Bromelia Vriesea Intenso Red, Bromelia Vriesea Intenso Pink, Bromelia Vriesea Intenso Yellow, Bromelia Guzmania, Bromelia Guzmania Deseo Salmon, Bromelia Guzmania Voila, Cichorium endiva, Cynodon dactylum, Ficus benjamina, Freesia* and *Lactuca sativa.*

The term "plant" includes hybrids, such as intergeneric hybrids and interspecific hybrids.

In one embodiment, the plant is an annual, a cereal, a crop, an epiphyte, a flowering plant, a non-flowering plant, food, a forest plant, a fruit tree, a garden plant, a greenhouse plant, a medicinal plant, an ornamental plant, a perennial, a pot plant, a toxic plant, a nontoxic plant, a tropical plant or a vegetable.

The term "plant" includes plant material used in tissue culture, such as plant tissue, plant cells and plant fragments. The method according to the invention may advantageously be used in *in vitro* methods, such as tissue culture.

The term "plant" also includes algae. In the context of the present invention, the term "algae" refers to a group of unicellular or multicellular photosynthetic non-vascular aquatic organisms, eukaryotic or prokaryotic. They typically live in sea, salt water, brackish water or fresh water. Algae may contain diverse bioactive compounds which are used in agriculture, the cosmetic industry, the food or feed industry or in the pharmaceutical industry. The term includes marine algae, also referred to as seaweed, such as red algae (*Rhodophyta*), green algae (*Chlorophyta*) or brown algae (*Ochrophyta, Phaeophyceae*)*.* In another embodiment, the algae are photosynthetic blue-green algae (*Cyanophyta*)*.* In one embodiment, the algae are *Alaria* species, *Ascophyllum* species, *Arthrospira* species, *Caulerpa* species, *Chondrus* species, *Chlorella* species, *Dunaliella* species, *Durvillaea* species, *Enteromorpha* species, *Fucus* species, *Gracilaria* species, *Laminara* species, *Pelvetia* species, *Pyropia* species, *Porphyra* species, *Sargassum* species, *Saccharina* species, *Spirulina* species, *Ulva* species or *Undaria* species. In another embodiment, the algal species is *Arthrospira maxima, Arthrospira platensis, Ascophyllum nodosum, Chlorella pyrenoidos, Chlorella vulgaris, Chondrus crispus, Dunaliella salina, Enteromorpha intestinalis, Fucus spiralis, Fucus vesiculosus, Gracilaria bursa-pastoris, Gracilaria crassa, Gracilaria dura, Gracilaria longa, Gracilaria verrucosa, Laminaria digitata, Laminaria ochroleuca, Laminaria pallida, Lessonia nigrescens, Macrocystis integrifolia, Macrocystis pyrifera, Nemacystus decipiens, Nereocystis luetkeana, Palmaria palmata, Porphyro purpurea, Porphyro umbilicalis, Saccharina japonica, Saccharina latissima, Saccharina longicruris, Saccharina sessilis, Sargassum filipendula, Sargassum fusiforme, Sargassum muticum, Ulva intestinalis, Ulva Compressa* or *Undaria pinantifida.*

The method of the present invention may also be applied to plants of which the genetic material has been manipulated or mutated, including genetically modified plants. Genetically modified plants include genetic material which is naturally not present in the plant species or in plants, such as bacterial, fungal, insect or mammalian genes. Therefore, the method of the present invention may also be applied to transgenic plants.

Any photosynthetic organism may be treated according to the method of the invention. In the context of the present invention, the term "photosynthesis" refers to a process which includes using photons from a light source, such as the sun or an artificial light source, to make chemical energy. Photosynthesis typically involves absorption of light energy by chlorophyll which leads to photoexcitation, which is the start of a chain of electron transfers. Light energy is stored in chemical form in ATP and NADP, which ultimately leads to the formation of glucose and oxygen. In the present context, the term "photosynthetic " means capable of photosynthesis. This plant may or may not be performing photosynthesis while the method according to the invention is applied. In the present context, the term" photosynthesizing " means performing photosynthesis. In one embodiment, a photosynthesizing plant is performing each and every step of the photosynthesis process up to the production of glucose and oxygen. In another embodiment, a photosynthesizing plant is performing only some of the steps of the photosynthesis process. In one embodiment, photosynthesis includes at least the absorption of light by chlorophyll or another light harvesting molecule.

Directing plant development may be apparent from for example, improved yield, improved growth, improved leaf formation, improved root formation, improved colour formation or improved flowering, compared to a similar plant to which has not been treated with radio wave energy of a frequency in the range from 1 MHz to 15 MHz. Improvements may be determined in any suitable way generally used by the person skilled in the art, for example by counting, weighing or measuring. Improvement in any one of these areas may be at least 5%, at least 10%, at least 15%, at least 20%, at least 30%, at least 40%, at least 50%, at least 60%, at least 70%, at least 80%, at least 90%, at least 100% at least 200%, at least 400% or at least 800%, such as about 5% to 50%, about 5% to 100%, about 10% to 100%, about 20% to 50%, about 20% to 100%, about 100% to 200%, 200% to 400% or 400% to 1000%.

Improved yield may be reflected in several ways, such as by more plants per area, more branches per plant, more buds per plant, more bulbs per plant, more fruits per plant, more flowers per plant, more leaves per plant, more seedlings from seed, more seeds per plant, more shoots per plant, more spores per plant, more starch per plant, more tubers per plant, more weight per plant, higher dry matter content, more primary metabolites per plant or more secondary metabolites per plant.

Improved growth may be reflected in several ways, such as by earlier germination, accelerated germination, accelerated stem growth, a thicker stem, shorter internodes, more compactness, improved fruit formation or being more visually attractive.

Improved leaf formation may be reflected in several ways, such as by more leaves per plant, more leaves per cm of stem, more buds per stem, larger leaves, broader leaves, thicker leaves, stronger leaves, better functioning leaves or earlier or accelerated leaf formation.

Improved root formation may be reflected in several ways, such as by more roots per plant, more roots per square area, accelerated root formation, earlier root formation, stronger roots, thicker roots, better functioning roots, or a more wide spread root network.

Improved colour formation may be reflected in several ways, such as by earlier colour formation, accelerated colour formation, more diverse colour formation, deeper colour formation, intenser colour or more stability of colour.

Improved flowering may be reflected in several ways, such as by earlier flowering, accelerated flowering, larger flowers, more flowers, more open flowers, longer lasting flowers, longer open flowers or with flowers which are more diverse in colour, with flowers with more stability of colour.

Improved fruit formation may be reflected in several ways, such as by earlier fruit formation, accelerated fruit formation, longer period of bearing fruit, earlier ripening of fruit, accelerated ripening of fruit, more fruit, heavier fruit, larger fruit or tastier fruit.

Improved taste may be reflected in several ways, such as by less acidity, more sweetness, more flavour, more complex flavour profile, higher nutrient content or more juiciness.

Improved health may be reflected in several ways, such as by being more resistant to chemical stress, being more resistant to physical stress, being more resistant to physiological stress, being more resistant to chemical stress, being more resistant to insect pests, being more resistant to fungal pests, growing more abundantly, flowering more abundantly, keeping leaves for a longer period or being more efficient in food uptake.

In one embodiment, the method of the invention may result in more plants or plant parts per area, such as more barks, berries, branches, buds, bulbs, cut branches, cut flowers, flowers, fruits, leaves, roots, seeds, shoots, spores or tubers per plant per area. Crop yield is increased. The harvest is more abundant and harvesting may take place after a shorter period of time, in comparison with a situation in which the method is not applied. In one embodiment, the application of the method according to the invention results in more kilos of flowers, fruits, grains or vegetables, such as apples, aubergines, bananas, barley, bell peppers, blackberries, blue berries, chives, courgettes, cucumber, endive, garlic, grapes, leek, lettuce, maize, melons, oats, onions, oranges, pears, peppers, potatoes, pumpkins, radish, raspberries, rice, rye, strawberries, sweet peppers, tomatoes or wheat.

In another embodiment, the application of the method according to the invention results in more kilos of barks, berries, branches, buds, flowers, fruits, leaves, roots or seeds from culinary or medicinal herbs, such as basil, chamomile, catnip, chives, coriander, dill, eucalyptus, fennel, jasmine, lavas, lavender, mint, oregano, parsley, rosemary, sage, thyme and thus to more aroma, flavour, fragrance, oil or taste in the same period of time or in a shorter period of time, in comparison to a similar situation in which the method has not been applied.

In another embodiment, the method according to the invention results in a higher yield of anti-oxidants, colourants, nutrients, polysaccharides, pigments or terpenes, such as agar, agarose, algae extract, alginate, carotenoids, carrageenans, chlorophyll, galactans, minerals, phycocyanins, polyunsaturated fatty acids (PUFAs) and vitamins.

In another embodiment, directing plant growth includes delaying certain plant growth or development stages, such as delaying bud development, delaying colour development, delaying flowering, delaying fruit development, delaying shedding of leaves, delaying leaf development, delaying shoot elongation, delaying shoot development, delaying tuber development or delaying root development.

Specific frequencies may be applied to the plant to achieve a specific effect. In one embodiment, from about 3.500 MHz to about 4.100 MHz is applied for simulating high temperatures, from about 4.100 MHz to about 4.800 MHz is applied for influencing photoperiodism, photomorphogenesis, photosynthesis or stimulating leave formation, from about 3.500 MHz to about 4.800 MHz for stimulating compact growth, from about 6.000 MHz to about 7.000 MHz is applied for influencing photomorphogenesis, photosynthesis or stimulating root formation, from about 7.000 MHz to about 10.000 MHz is applied for photomorphogenesis or from about 10.000 MHz to about 14.000 MHz is applied for stimulating photosynthesis. In one embodiment, photoperiodism of angiosperms is influenced using the method according to the invention and flowering of short-day plants or long-day-short-day plants is delayed until a desired time of the year.

Plants which are the result of the method according to the invention are another aspect of the invention. Such plants may be compacter, bushier, have better root development, fuller with flowers or better coloured than similar plants which have not received radio wave treatment. The period of comparison with a control plant or control situation may be any period, from several hours, several days or several weeks to several months or several years. The area of comparison may be any area, such as square meters or hectares.

In the context of the present invention, the term "radio waves" refers to electromagnetic radiation with a frequency in the range of 3 kHz and 300 MHz. The method of the present invention uses radio waves with a frequency in the range of 1 to 15 MHz, preferably 3 to 14 MHz, which corresponds to wavelengths in the range of about 20 m to 300 m. The waves may have any form, be it sinusoidal, square, saw tooth or triangle. In one embodiment, the waves are sinusoidal.

In one embodiment, radio wave energy with a frequency in the range from 1 MHz to 15 MHz is applied to the plant while the plant is exposed to some form of light. Exposure to light typically starts photosynthesis. Therefore, in one embodiment, radio wave energy with a frequency in the range from 1 MHz to 15 MHz is applied to a photosynthesizing plant. The method of the invention is useful for both C3, C4 and CAM plant photosynthesis. The source of light may be any form of light, such as sunlight or artificial light. Artificial light includes light from incandescent light sources, gas-discharge lamps, such as fluorescent lamps, and LED light. In one embodiment, the light source is full spectrum LED light. In another embodiment, the light source is daylight or sunlight. In one embodiment, radio wave energy with a frequency in the range from 1 MHz to 15 MHz is applied to the plant while the plant is in the dark or in a dark room, e.g. in a cell culture room with no excess to daylight. The plant may be exposed to light in cycles, for example, 16 hours of artificial light and 8 hours without light. The radio wave energy may be applied all the time, only during darkness, only when the lights are on or only when the lights are off, depending on the effect to be achieved.

In yet another embodiment, the plant to which radio wave energy is applied is in a greenhouse. The greenhouse may be provided with artificial lighting, although this is not necessary. In one embodiment, the method according to the invention is applied to cucumbers in a greenhouse with no additional artificial lighting applied. In yet another embodiment, the plant is in the open field.

Plants are exposed to radio waves with a frequency from 1 MHz to 15 MHz as long as necessary. In one embodiment, plants are exposed for several days, such as from 1-30 days, from 5-25 days or from 20-30 days. In another embodiment, plants are exposed for several months, such as for at least 1 month, for at least 2 months, for at least 3 months, for at least 4 months or for at least 6 months, from 1-2 months, from 1-4 months, from 1-6 months, from 4 to 8 months or from 1-15 months. During these periods, radio waves may be applied all the time or some of the time, depending on the effect to be achieved. For example, it may be applied, 4-12 hours a day, 4-8 hours a day or 8-12 hours a day. During application, the radio waves are preferably applied continuously and not in pulses. The radio waves may be applied while plants are in the light, in the dark, while plants are exposed to light or while lights are switched off or blocked out. Light may refer to sunlight or other light, such as artificial light, for example from LED tubes.

The radio waves may be applied to the plant, which includes application to part of the plant, such as to roots, stem, leaves, flowers, fruits or seeds. The radio waves may also be applied to spores, bulbs, branches, shoots, seedlings or to the germinated plant.

In another aspect, the present invention relates to a device which is suitable for use in the method according to the invention. The device 1 comprises a power supply 2 and a casing 3, the casing 3 housing a module 4 for radio wave transmission, the module 4 comprising an oscillation circuit 5, a transmitter 6 and an integrated antenna 7. In operation, the power supply 2 powers the oscillating circuit 5, which oscillating circuit 5 produces an electronic signal with a frequency in the range from 1 MHz to 15 MHz, which electronic signal is applied by the transmitter 6 to the integrated antenna 7 which is connected to the transmitter 6. The antenna 7 emits electromagnetic radio waves 8 with a frequency in the range from 1 MHz to 15 MHz. The module 4 may produce and transmit one frequency or several frequencies in the range from 1 MHz to 15 MHz. The antenna 7 is integrated, i.e. is inside the casing 3, preferably installed on the printed circuit board. One advantage of an integrated antenna is that it contributes to the compactness and user friendliness of the device. It allows for freedom of positioning of the device. There is no need to position plants exactly between parts of the device, as may be the case for external antenna's or for devices comprising several parts. The device according to the invention has good practical applicability and scalability.

FIG. 1 shows one embodiment of a device according to the invention. The dashed lines indicating space for more modules 4. In a device comprising several modules 4, some modules may be switched on while others are switched off.

In one embodiment, the device comprises several modules 4, such as 4 to 10 modules 4. The several modules 4 may produce and transmit radio waves 8 of the same frequency or frequencies, or each module 4 may produce and transmit radio waves 8 with a frequency which is different from the frequency or frequencies produced by the other modules 4.

In one embodiment, the device 1 comprises one or more modules 4, the modules 4 producing and transmitting radio waves with a frequency in the range from 3.500 MHz to 3.750 MHz, from 3.750 MHz to 4.500 MHz, from 4.500 MHz to 5.000 MHz, from 5.500 MHz to 7.000 MHz or 7.500 MHz to 14.000 MHz.

In another embodiment, the device 1 comprises one or more modules 4 producing and transmitting radio waves with a frequency in the range of from 3.300 MHz to 3.750 MHz, from 3.800 MHz to 4.150 MHz, from 4.160 MHz to 4.800 MHz or from 6.000 MHz to 6.700 MHz, such as radio waves with a frequency of about 3.700 MHz, about 4.000 MHz, about 4.300 MHz or about 6.500 MHz.

In another embodiment, the device 1 comprises eight or nine modules 4, each module 4 producing and transmitting radio waves at a different frequency, for example selected from . about 3.700 MHz, about 4.100 MHz, about 4.408 MHz, about 4.540 MHz, about 4.759 MHz, about 5.657 MHz, about 6.662 MHz, about 7.889 MHz or about 13.324 MHz.

In one embodiment, the modules 4 in the device 1 emit radio waves of at least two, at least four, at least eight, or at least 12, at least 16, at least 25, at least 50 or at least 100 different frequencies.

The device 1 may have any dimensions and preferably resembles a flat box. In one embodiment the device is a compact and portable flat box. Suitable dimensions for a portable device are for example about 11x20x2 cm or 15x30x2 cm. In another embodiment, the device is larger, for example, 50x 100x2 cm. The casing 3 of the device 1, comprising the module(s) 4, may be of any suitable material. In one embodiment, the casing 3 is a plastic casing. The side at which the integrated antenna 7 is located is referred to as the emitting side. Preferably, the emitting side of the module in the device 1 is directed in the direction of the plant while the device 1 is positioned in a horizontal plane above the plant. Alternatively, the device 1 is positioned so that the emitting side is perpendicular to a horizontal plane above the plant. In this way, sufficient radio wave energy reaches the plant and the chance of obstructions being in the way is minimised.

The emission angle of the device 1 is preferably wide. In one embodiment, the emission angle is at least 145 degrees. In another embodiment, the emission angle is about 180 degrees. In yet another embodiment, the emission angle is 360 degrees or spherical, emitted in every direction.

The device 1 may comprise connecting means for connection to the mains. Alternatively, the device may be powered by a solar panel. In this way, the device will be switched on when the solar panel catches light, and will be automatically switched off when the solar panel does not catch light. Of course a device connected to a solar panel may also use normal electrical power or batteries if operation during dark periods is needed or when the direct sunlight is insufficient (e.g. because of clouds) to provide the power required to produce the radio wave energy signal. An embodiment wherein the device comprises connection means for connection to a solar cell or panel, typically at a low voltage, for example 12 to 48V DC, for example may advantageously be applied in open fields.

The power used by the device according to the invention is quite low and may be in the range from 0.4 Watt to 0.8 Watt, such as 0.6 Watt, per module at the secondary site of the power supply. In one embodiment, the power used by a device is about 5 Watt for an 8-module device, which means that using the device is very economical.

In one embodiment, the device 1 also comprises dip switches to switch antennas 7 on and off, which is preferably indicated by an indication means, for example by a white or red LED. Alternatively, antenna output may be faded to gradually increase or gradually decrease, instead of just being on or off. In this way, an antenna may be switched on for any value between 1% and 100% of its maximum output, for example between 20% and 75% of its maximum value.

The oscillator 5 in the module 4 produces an electronic signal with a frequency in the range from 1 MHz to 15 MHz. The oscillator 5 may be an electronic oscillator, such as a harmonic oscillator or a relaxation oscillator. In one embodiment, the oscillator 5 is a harmonic oscillator, for sinusoidal output. The harmonic oscillator is preferably a feedback oscillator with a frequency selection electronic filter to obtain a single frequency. In one embodiment, the frequency selection electronic filter is of the crystal type (CO), typically comprising a piezo electric crystal, such as a quartz. In another embodiment, the electronic oscillator is a programmable oscillator. The oscillator5 may be set at any desired frequency. An oscillator suitable for use in a method according to the invention may be obtained from an electronics supplier, for example from Elincom Electronics BV, Capelle aan de IJssel, the Netherlands. In one embodiment, the oscillator 5 is producing an electronic signal with a frequency as mentioned in Table 1. In another embodiment, the oscillator 5 is producing an electronic signal with a frequency as mentioned in Table 6. The skilled person will understand that resistors, capacitors, amplifiers, transistors, diodes, voltage regulators may be included as well. These electronic parts are available from electronics suppliers, such as Conrad Electronic Benelux BV, Oldenzaal, The Netherlands. The capacitors used are preferably ceramic capacitors. In one embodiment, one of the diodes is used to indicate both the connection to power and the functioning of the circuit.

Alternatively, the frequency input for the device 1 may be computer generated, in which case an oscillator 5 is not required. In one embodiment, the frequencies are generated by a sweep generator.

In one embodiment, the device 1 only comprises modules 4 which emit waves with a frequency in the range from 1 MHz to 15 MHz. In another embodiment, the device 1 further comprises modules 4 which emit waves with frequencies outside the range of from 1 MHz to 15 MHz. In one embodiment, at least 50%, at least 70%, at least 80%, at least 90% or at least 95% of the electromagnetic energy which the device is emitting has a frequency in the range from 1 MHz to 15 MHz.

The device may be used in the method according to the invention. Therefore, in another aspect, the invention relates to the use of the device in a method for directing plant development. The device is preferably mounted in free space, as much as possible removed from walls, glass and screens, to allow the radio waves generated by the device to be propagated freely.

The device is placed in the vicinity of a plant to be treated, preferably in a horizontal plane above the plant to be treated. Although the device could be placed next to a plant, under a plant or between plants, this is not preferred because this may have several disadvantages, such as occupying space which could be used for growing plants, creating shadows, objects which may interfere with the radio waves, objects, the device may interfere with people and irrigation systems, and limited accessibility of the device for operation or maintenance. However, if there are no interfering objects in the way and if it is practically feasible, the device can be placed next, under or between plants with good results. In one embodiment, a device according to the invention is mounted to an upright of a greenhouse at plant level. The integrated antenna allows for freedom of positioning of the device. There is no need to position plants exactly between parts of the device, as may be the case for external antenna's or for devices comprising several parts or electrodes.

The radio waves emitting side of the device is facing the plant, so that radio wave energy is emitted in the direction of the plant, or the radio waves may be emitted in a horizontal plane above the plant. If the device is in a horizontal plane above the plants, so that the plants are in a horizontal plane below the device, this ensures optimal working and results, and minimises the risk of interference. It also allows for optimal use of available space.

The device may be at any convenient distance in a horizontal plane above the plants to be treated. However, care should be taken that sufficient energy reaches the plant. The energy reaching the plant tissue is preferably in the range from 0.1 mV/m to 1000 mV/m, such as from 1 mV/m to 1000 mV/m, from 2.5mV/m to 250 mV/m or from 2.5 mV/m to 40 mV/m. A suitable distance can be easily determined by a person skilled in the art. Generally, the distance is 10 cm to 5 m, preferably 20 cm to 2 m, from a horizontal plane above the top of the plant material to be treated. This is typically the situation at the start of treatment. If required, for plants growing high, the position of the device may be adjusted during growth to keep the device above the plant, but preferably the device is positioned high enough to take growth into account.

High voltages are not required, which contributes to safe use. In one embodiment, the electric field strength in a horizontal plane at 10 cm from the antenna 7 at the emitting side of the module is in the range of 0.5 to 1.5 V/m, such as 1.0 V/m. In one embodiment, this is measured from the center of the measuring sensor. Under these conditions, sufficient energy will reach the plant to be treated if the distance between plant and device is in the range of about 10 cm to about 5 meter, such as 20 cm to 2 meter, 50 cm to 2 meter, 1 to 2 meter or 20 cm to 1.5 meter. In one embodiment, plants are in a culture room and one or more devices are at a distance of about 20 cm to about 2 m, such as at 50 cm to 2 m, above the plants.

Of course, the distance between plant and device may be larger. In one embodiment, the plants are in a greenhouse and one or more devices are at a distance of about 1 m to 10 m, such as at 5 to 7 meter from the plants. The skilled person will understand that the larger the distance, the more the electric field generated by the device may have to be increased to make sure that the energy reaching the plant tissue is still in the range from 0.1 mV/m to 1000 mV/m. The further away the device from the plant, the weaker the effect, but also the greater the chance that disturbing objects will be in the way. Care should be taken to clear the distance between device and plant as much as possible since any object that hinders the travelling waves may impede the energy that reaches the plant.

The number of devices used may vary. In one embodiment, one device per 10 to 100 square meters is used, for example, one device per 20-40 square meter, one device per 45-55 square meter, one device per 50-70 square meter, one device per 60-70 square meter or one device per 70-80 square meter, depending on the plants involved. In another embodiment, one device is used in a greenhouse or culture room of about 60 square meters. In yet another embodiment, several devices are mounted in a grid pattern in a horizontal plane above the plants in a greenhouse. Of course, care should be taken that radio waves reach the plants to be treated with sufficient energy. The direction of the magnetic field will change with the frequency. It may be in the range of 40 to 50 microTesla, such as 44-45 microTesla.

Use of the device according to the invention has enormous economic, social and environmental advantages, because it may replace all or part of the artificial lighting normally required. The device may also be used when light intensity is very low, such as in the dark or at night time, for example for mushrooms, or plants collecting carbon dioxide in the dark, like CAM plants. In one embodiment, the device replaces 20% to 30% of the artificial lighting, which would be required if a device according to the invention was not used. In another embodiment, one device according to the invention of 3-6 Watt replaces 600 watt of artificial lighting, while the results in plant growth stimulation are equivalent. Therefore, it may also be used in areas or situations in which light is scarce and artificial not readily available or affordable.

### EXAMPLES

### Example 1 Lettuce treated according to the method of the invention

A total of 48 rooted young plants of the species *Lactuca sativa* (Beekenkamp Plants BV, Maasdijk, the Netherlands), grown from the same batch of seeds, were divided over 4 trays of hydroponic pots, floating in water with an electric conductivity of 2 at the start of the experiment. The four trays were divided over two incubators and during the whole experiment the temperature in both incubators was kept at 13 DEG C ± 0.2 DEG C, and relative humidity of 85% ± 0.2%. The two incubators were set up 4 meters apart within a greenhouse.

Each incubator contained two Faraday cage constructions from 25 mm mesh chicken wire to ensure that all electromagnetic radiation generated within the cage actually stayed within that cage. Each Faraday cage contained 12 plants, one device and LED light (full spectrum Agro-Led Tubes, Agro-Led B.V., Kwintsheul, the Netherlands). The device was fixed in the center of the top shelf at about 44 centimeters above the rooted plants. The LED light was at about 40 cm above the plants. In each incubator, temperature and relative humidity were controlled by a climate computer (HortiMaX-Gol, Ridder Growing Solutions, Maasdijk, Netherlands), to allow for double monitoring of relative humidity and temperature. Each device comprised eight modules for emitting through their antennas radio wave radiation with the frequencies mentioned in Table 1.

**Table 1**

| **antenna no.** | **frequency (MHz)** |
|---|---|
| 1 | 3.700 |
| 2 | 4.100 |
| 3 | 4.408 |
| 4 | 4.54230 |
| 5 | 4.75860 |
| 6 | 5.65650 |
| 7 | 6.66210 |
| 8 | 7.88930 |

The eight modules of the device in the first Faraday cage were switched on. The modules in the devices in the other cages (controls) were not switched on. The full spectrum LED light was applied during 12 hours of the day, and the device was switched on during the time that light was applied.

After five weeks, all plants were harvested by cutting each plant at the base of the stem. After harvesting, the plants from each cage were weighed immediately and then dried at a temperature of 60 DEG C for a period of 72 hours in a vegetable dryer (Biosec DOMUS, Tauro Essicatori, Camisano Vicentino, Italy) for determination of dry weight. Fresh and dry weight were determined per 12 plants. The results are presented in Table 2 and show that plants treated with the method according to the invention had approximately 23% more fresh weight and 120% more dry weight than the controls.

**Table 2**

| **Incubator 1** | **device** | **total fresh weight (gram)** | **total dry weight (gram)** |
|---|---|---|---|
| **Cage 1** | on | 295 | 33 |
| **Cage 2** (control) | off | 242 | 15 |

| **Incubator 2** | | | |
|---|---|---|---|
| **Cage 3** (control) | off | 240 | 15 |
| **Cage 4** (control) | off | 242 | 15 |

### Example 2 Anthurium plants treated according to the method of the invention

Anthurium plants are ready for sale when at least three flowers are present on a plant. A group of 24 Anthurium plants (Anthura B.V., Bleiswijk, the Netherlands) was grown in a greenhouse while treated with the device according to the invention using the frequencies mentioned in Table 1. A control group of 24 Anthurium plants was grown under similar conditions, but the device was not switched on.

After 24 weeks, the total numbers of flowers in the test group was 60, with 19 plants having at least 3 flowers and therefore being ready for sale. In the control group, the total numbers of flowers was 33 flowers, with only two plants having at least 3 flowers and therefore being ready for sale (Table 3).

**Table 3 Anthurium flowering 24 weeks**

| | number of plants | plants ready for sale after 24 weeks |
|---|---|---|
| Test group | 24 | 19 |
| Control group | 24 | 2 |

This shows that the device and method according to the invention resulted in eight times more plants ready for sale after 24 weeks. This is an enormous improvement which means more production and faster cycles. With the same investment, 800% more production was achieved.

### Example 3 Bromeliads treated according to the method of the invention

Seven different cultivars of bromeliads, for each cultivar a group of 40 plants having the same plant volume as measured by an Aris camera (Aris B.V., Eindhoven, the Netherlands) were grown. In each group, 20 plants were treated with the method and device according to the invention and 20 plants received no treatment (control group). The bromeliads were grown for 14 weeks starting in week 40 and using all frequencies mentioned in Table 1, after which the plant volume was measured again and compared to the loaf volume at the start of the experiment. Table 4 shows percentage of growth compared to the start. The results show that the plant volume of treated plants has increased more, on average 20% more, than the plant volume of the plants in the control group. This is an enormous improvement, which allows a breeder to save 20% on energy for heating and lighting required for plant breeding. With the same investment, 20% more production was achieved.

**Table 4**

| | **Control** | **Test group** | |
|---|---|---|---|
| **Bromeliads** | **Growth (%)** | **Growth (%)** | **Difference (%)** |
| Vriesea Intenso Yellow | 50.1 | 70.7 | 20.6% |
| Vriesea Intenso Red | 42.8 | 64.3 | 21.5% |
| Vriesea Intenso Pink | 37.8 | 57.4 | 19.6 |
| Ananas Pacifico | 24.4 | 37.2 | 12.8 |
| Guzmania Deseo Salmon | 41.0 | 64.0 | 23.0 |
| Guzmania Voila | 41.8 | 64.9 | 23.1 |
| Guzmania Deseo Pink | 35.8 | 55.4 | 19.6 |
| Average increase of growth | | | 20.02% |

### Example 4 Stimulation of compact growth

Four different cultivars of bromeliads and one *Ficus benjamina* cultivar were grown in the same hall in separate Faraday cages under identical circumstances in two groups. The only difference was the frequency applied. Group A consisted of 6 plants which were treated with a device comprising eight modules, five of which were switched on and emitting radio waves with the following frequencies: 3.700 MHz, 4.100 MHz, 4.408 MHz, 4.5423 MHz and 4.7586 MHz. The control group consisted of 6 plants which received no treatment. The plants were grown for 13 weeks during which the device was turned on 12 hours a day during daytime period in the light. For each cultivar, plant volume was measured by an Aris camera (Aris B.V., Eindhoven, the Netherlands) before and after treatment with the device and percentage of growth was determined.

Results are shown in Table 5. The results shows that the growth of the plants which received radio waves of 3.700 MHz, 4.100 MHz, 4.408 MHz, 4.54230 MHz and 4.75860 MHz (group A) was compacter than the control. The bromeliads had shorter leaves and the ficus had shorter internodes, in comparison to the control. Compact growth is highly desired because compact plants are visually attractive to the customer. Compact plants also have a logistic advantage, because transportation and storage can be more efficiently performed. Compact growth could be reached without adding growth regulators for compact growth. This means that costs could be saved and that a good alternative is available for growth regulators which are more and more prohibited because of their negative environmental impact.

**Table 5**

| | **% increase in plant volume** | | **% difference** |
|---|---|---|---|
| | **Group A** | **control** | |
| Bromelia Vriesea Astrid | 29 | 38 | 25 |
| Bromelia Guzmania Voila | 82 | 84 | 3 |
| Bromelia Ananas Pacifico | 106 | 142 | 25 |
| Bromelia Vriesea Intenso Red | 68 | 75 | 10 |
| Ficus benjamina | 155 | 184 | 16 |

### Example 5 Stimulation of leaf formation

A group of twelve germinated freesias (*Freesia sp.*) was grown for five days while treated with the device according to the invention. The device comprised four modules, each module producing radio wave energy of a single frequency, viz. 3.700 MHz, 4.000 MHz, 4.300 MHz and 6.500 MHz (Table 6) . During treatment the plants were lit by full spectrum LED tubes (full spectrum Agro-Led Tubes, Agro-Led B.V., Kwintsheul, the Netherlands). Both the device and

**Table 6**

| **module no.** | **frequency (MHz)** |
|---|---|
| 1 | 3.700 |
| 2 | 4.000 |
| 3 | 4.300 |
| 4 | 6.500 |

LED tubes were at a distance of approximately 20 cm above the plants. At night the device was switched off. A control group of twelve germinated freesias was grown at a separate location under similar conditions, except that no radio waves were applied. After five days, the plants in the group which had received radio waves showed about 35% more leaves and taller leaves in comparison to the control group. This shows that the device and method of the invention, may be used to increase leaf formation in plants in just a few days.

### Example 6 Increasing colour

Approximately 2 sq. meter of red lettuce plants (*Lactuca sativa*) in a greenhouse at 20 DEG C in daylight were treated a device according to the invention. The device comprised four modules, each module producing radio wave energy of a single frequency, as mentioned in Table 6. At night the device was switched off. A control group of red lettuce plants was grown at a separate greenhouse under similar conditions, except that no radio waves were applied.

After eight days, the effect of the radio wave energy was immediately clear. The plants in the treatment group had intensely red coloured leaves, while the plants in the control group had little red colour. The dry matter content of the treated plants was approximately 15% higher than the control group. This shows that the device and method according to the invention may be used to stimulate colour formation and render vegetables visually more attractive, which may stimulate vegetable consumption.

### Example 7 Increasing dry weight in food crops

Approximately 2 square meters of endive plants (*Cichorium endivia*) growing in a greenhouse at 20 DEG C in daylight were treated with a device according to the invention. The device comprised four modules, each module producing radio wave energy of a single frequency as mentioned in Table 6. The device was mounted approximately 1.5 m above the endive plants. At night the device was switched off. A control group of endive plants was grown at a separate greenhouse under similar conditions, except that no radio waves were given. After eight days of treatment, the plants were compared. The endive plants which received radio wave energy had more and crispier leaves than the control plants. The dry matter content of the plant was approximately 20% higher than the control group. The device and method thus allow for the increase of the yield of food crops. This may advantageously be used in areas where crop yield is normally low.

### Example 8 Specific stimulation of leaf formation or root development

Grass seeds (Bermuda grass, *Cynodon dactylon*) were divided over three trays and grown in soil in three separate culture rooms at 25 DEG C, 60% relative humidity, light intensity 260 micromol m⁻²s⁻¹ and CO₂ pressure 500 ppm and positioned under a device according to the invention emitting radio waves of a frequency of 4.300 MHz (room 1), 6.500 MHz (room 2) and no radio waves (control group, room 3). The device and the full spectrum LED tubes (full spectrum Agro-Led Tubes, Agro-Led B.V., Kwintsheul, the Netherlands) were mounted approximately 20 cm above the tray. The culture rooms had no access to daylight. The LED tubes and device were switched on for 16 hours and then switched off for 8 hours.

After 21 days, the grasses were compared. The seeds of the control grasses were grown into very few and small grass stalks, while the seeds of room 1 and room 2 had grown into full bushes. The grass in room 1, which had received 4.300 MHz, had the longest stalks and was the fuller than the grass in room 2. However, the grass which had received 6.500 MHz showed stronger root development than the other grasses. This shows that the device and method of the invention may be used for germinating seeds and that application of specific frequencies may result in specific stimulating of root development or leaf formation.

### Example 9 Commercial greenhouse trial Ananas comosus (pine apple)

A batch of *Ananas comosum* plants, a fast growing Bromeliad, was divided in two groups. A total of 10 032 plants were placed side by side in a bay in a greenhouse with devices according to the invention mounted to the uprights of the greenhouse at crop height. This time the device is thus not positioned above the plants, but in the same horizontal plane as the plants. The devices emitted radio waves of the frequency of Table 1. This was the test group. In another bay, at a distance of 12.80 m from the first bay, within the same department of the greenhouse, 10 032 plants were placed without a device according to the invention. This was the control group. All plants were kept under the same climatic conditions.

Increase in volume of the plants was measured using an Aris Vision Technology 3.0 camera system S3 (Aris B.V., Eindhoven, the Netherlands) measuring one upper view plus 2 side views of each single plant. Volume was expressed as counted pixels. Plants were sorted in classes, S2-S8, each class requiring a minimum amount of pixels. For instance, S3 required a pixel score of at least 21 000 pixels but less than 24 500 pixels.

All plants in both groups started at 17 000 pixels. The plants were grown for five weeks. As plants became bigger, they were put further apart, in order for their leaves not to overlap. At the end of the 5-week period, plants were sorted again by the camera system.

All plants in both groups looked good and there were no damages or other visible imperfections that could have adversely affected the growth. The average root quality of both groups was good and comparable. Results are presented in Table 7. The higher the pixel score, the larger the overall volume of the plant. The larger the volume of the plant, the more ready it is for selling.

**Table 7**

| | | **control group** | **test group (invention)** |
|---|---|---|---|
| | **pixels** | **number of plants** | **number of plants** |
| **S2** | 17.500 | 816 | 10 |
| **S3** | 21.000 | 3792 | 595 |
| **S4** | 24.500 | 3304 | 4785 |
| **S5** | 28.000 | 1783 | 3997 |
| **S6** | 31.500 | 317 | 618 |
| **S7** | 35.000 | 4 | 20 |
| **S8** | 38.500 | 0 | 2 |
| **total** | | 10 016 | 10 027 |
| **died/lost** | | 16 | 5 |
| **average size** | | 23 453 points | 26 136 points |
| **growth** | | 6 453 points | 9 136 points |

In the test group, 6% of the plants were still in S2 or S3 after five weeks , while this was 45% for the plants in the control group. Therefore, plants treated with a device according to the invention have increased in volume faster than plants in the control group.

The average volume in the control group after five weeks is 23 453 pixel points and 26 136 pixel points in the test group. Relative volume increase in pixels, starting from 17 500 points, is thus 9 136 points per plant on average in the test group, as opposed to 6 453 points per plant on average for the control group. This means a relative growth advantage and relative faster volume increase of plants of 42% (9 136/6 453*100%) when a device according to the invention is used.

## Claims

1. A method for directing plant development, the method comprising applying radio wave energy with a frequency in the range from 1 MHz to 15 MHz to a plant from a device (1) comprising a power supply (2) and a casing (3), the casing (3) housing a module (4) for radio wave transmission, the module (4) comprising a means for frequency input (5), a transmitter (6) for applying a frequency in the range of 1 MHz to 15 MHz to an antenna (7), and an integrated antenna (7) for emitting radio waves with a frequency in the range of 1 MHz to 15 MHz.

2. Method according to claim 1, wherein the device generates an electric field in the range of 0.5 to 1.5 V/m, measured within 10 cm from the device.

3. Method according to claim 1 or 2, wherein the frequency is in the range from 3 MHz to 8 MHz or 10 MHz to 14 MHz.

4. Method according to any one of claims 1 to 3, wherein the plant is a member of the *Alliaceae, Araceae, Asparagaceae, Aspiaceae, Asphodelaceae, Asteraceae, Araucariaceae,* Brassicaceae, *Bromeliaceae, Bromelioideae, Buxaceae, Cichorioideae, Coniferae, Cucurbitaceae, Fabaceae, Gentianaceae, Iridaceae, Leguminosae, Liliaceae, Marantaceae, Marasmiaceae, Orchidaceae, Pleurotaceae, Pinaceae, Poaceae, Bambusoideae, Panicoideae, Rosaceae, Rutaceae, Solanaceae,* Taxaceae, *Tuberacea, Vandeae, Vitacea* or *Xanthorrhoeaceae* family or a member of the *Rhodophyta, Chlorophyta, Ochrophyta, Phaeophyceae* or *Cyanophyta* group.

5. Method according to any one of claims 1 to 4, wherein the method is a method for increasing dry weight yield, stimulating leaf formation, stimulating seeds ripening, stimulating root development, stimulating colour in the leaves, stimulating flower formation or stimulating compact growth of a plant.

6. Method according to any one of claims 1 to 5, wherein the radio wave energy is applied for a period in the range from 5 days to 24 weeks, resulting in increased dry weight yield, more leaf formation, more seeds ripening, more root development, more colour in the leaves or more flower buds, compared to a similar plant to which radio wave energy has not been applied.

7. Method according to any one of claims 1 to 6, wherein one or more frequencies in the range of 3.500 MHz to 3.750 MHz, from 3.750 MHz to 4.500 MHz, from 4.500 MHz to 5.000 MHz, from 5.500 MHz to 7.000 MHz or 7.500 MHz to 14.000 MHz are applied.

8. Method according to any one of claims 1 to 7 wherein one or more frequencies in the range of 6.000 MHz to 7.500 MHz are applied, resulting to stimulation of root formation.

9. Method according to any one of claims 1 to 8, wherein one or more frequencies in the range of 3.750 MHz to 5.000 MHz are applied, resulting to stimulation of leave formation.

10. A device for use in a method according to any one of claims 1 to 9, the device (1) comprising a power supply (2) and a casing (3), the casing (3) housing a module (4) for radio wave transmission, the module (4) comprising a means for frequency input (5), a transmitter (6) for applying a frequency in the range of 1 MHz to 15 MHz to an antenna (7), and an integrated antenna (7) for emitting radio waves with a frequency in the range of 1 MHz to 15 MHz .

11. Device according to claim 10, wherein the device comprises two or more modules (4).

12. Device according to claim 10 or 11, wherein the device comprises at least one module (4) for emitting one specific frequency in the range of 1 MHz to 15 MHz.

13. Device according to claim 12, wherein each module (4) emits one specific frequency in the range of 1 MHz to 15 MHz when switched on.

14. Device according to any one of claims 10 to 12, wherein the device (1) comprises a module (4) for emitting more than one specific frequency in the range of 1 MHz to 15 MHz.

15. Device according to any one of claims 10 to 14, which further comprises a connecting means for a solar cell or solar panel.

16. Use of a device according to any one of claims 10 to 15 in a method according to any one of claims 1 to 9 for accelerating leaf formation of plants, for stimulating seed germination, for stimulating root formation of plants, for accelerating colour formation of plants, for stimulating shoot formation of plants, for increasing dry matter content of plants or for stimulating compact growth of plants.

## Patentansprüche

1. Verfahren zum Leiten von Pflanzenentwicklung, wobei das Verfahren Anwenden von Funkwellenenergie mit einer Frequenz im Bereich von 1 MHz bis 15 MHz auf eine Pflanze von einer Vorrichtung (1) umfasst, die eine Leistungsversorgung (2) und ein Gehäuse (3) umfasst, wobei in dem Gehäuse (3) ein Modul (4) zur Funkwellensendung untergebracht ist, wobei das Modul (4) ein Mittel zur Frequenzeingabe (5), einen Sender (6) zum Anlegen einer Frequenz im Bereich von 1 MHz bis 15 MHz an eine Antenne (7) und eine integrierte Antenne (7) zum Emittieren von Funkwellen mit einer Frequenz im Bereich von 1 MHz bis 15 MHz umfasst.

2. Verfahren nach Anspruch 1, wobei die Vorrichtung ein elektrisches Feld im Bereich von 0.5 bis 1.5 V/m generiert, gemessen innerhalb von 10 cm zu der Vorrichtung.

3. Verfahren nach Anspruch 1 oder 2, wobei die Frequenz im Bereich von 3 MHz bis 8 MHz oder 10 MHz bis 14 MHz liegt.

4. Verfahren nach einem der Ansprüche 1 bis 3, wobei die Pflanze zu der Familie der *Alliaceae, Araceae, Asparagaceae, Aspiaceae, Asphodelaceae, Asteraceae, Araucariaceae, Brassicaceae, Bromeliaceae, Bromelioideae, Buxaceae, Cichorioideae, Coniferae, Cucurbitaceae, Fabaceae, Gentianaceae, Iridaceae, Leguminosae, Liliaceae, Marantaceae, Marasmiaceae, Orchidaceae, Pleurotaceae, Pinaceae, Poaceae, Bambusoideae, Panicoideae, Rosaceae, Rutaceae, Solanaceae, Taxaceae, Tuberacea, Vandeae, Vitacea* oder *Xanthorrhoeaceae* gehört oder zu der Gruppe der *Rhodophyta, Chlorophyta, Ochrophyta, Phaeophyceae* oder *Cyanophyta* gehört.

5. Verfahren nach einem der Ansprüche 1 bis 4, wobei das Verfahren ein Verfahren zur Steigerung der Trockengewichtausbeute, Stimulation der Blattbildung, Stimulation der Samenreifung, Stimulation der Wurzelentwicklung, Stimulation der Farbe in den Blättern, Stimulation der Blütenbildung oder Stimulation des kompakten Wachstums einer Pflanze ist.

6. Verfahren nach einem der Ansprüche 1 bis 5, wobei die Funkwellenenergie für eine Zeitspanne im Bereich von 5 Tagen bis 24 Wochen angewendet wird, was zu einer gesteigerten Trockengewichtausbeute, mehr Blattbildung, mehr Samenreifung, mehr Wurzelentwicklung, mehr Farbe in den Blättern oder mehr Blütenknospen führt, verglichen mit einer ähnlichen Pflanze, auf die keine Funkwellenenergie angewendet wurde.

7. Verfahren nach einem der Ansprüche 1 bis 6, wobei eine oder mehrere Frequenzen im Bereich von 3.500 MHz bis 3.750 MHz, von 3.750 MHz bis 4.500 MHz, von 4.500 MHz bis 5.000 MHz, von 5.500 MHz bis 7.000 MHz oder 7.500 MHz bis 14.000 MHz angewendet wird/werden.

8. Verfahren nach einem der Ansprüche 1 bis 7, wobei eine oder mehrere Frequenzen im Bereich von 6.000 MHz bis 7.500 MHz angewendet wird/werden, was zur Stimulation der Wurzelbildung führt.

9. Verfahren nach einem der Ansprüche 1 bis 8, wobei eine oder mehrere Frequenzen im Bereich von 3.750 MHz bis 5.000 MHz angewendet wird/werden, was zur Stimulation der Blattbildung führt.

10. Vorrichtung zur Verwendung in einem Verfahren nach einem der Ansprüche 1 bis 9, wobei die Vorrichtung (1) eine Leistungsversorgung (2) und ein Gehäuse (3) umfasst, wobei in dem Gehäuse (3) ein Modul (4) zur Funkwellensendung untergebracht ist, wobei das Modul (4) ein Mittel zur Frequenzeingabe (5), einen Sender (6) zum Anlegen einer Frequenz im Bereich von 1 MHz bis 15 MHz an eine Antenne (7) und eine integrierte Antenne (7) zum Emittieren von Funkwellen mit einer Frequenz im Bereich von 1 MHz bis 15 MHz umfasst.

11. Vorrichtung nach Anspruch 10, wobei die Vorrichtung zwei oder mehr Module (4) umfasst.

12. Vorrichtung nach Anspruch 10 oder 11, wobei die Vorrichtung mindestens ein Modul (4) zum Emittieren einer spezifischen Frequenz im Bereich von 1 MHz bis 15 MHz umfasst.

13. Vorrichtung nach Anspruch 12, wobei jedes Modul (4) eine spezifische Frequenz im Bereich von 1 MHz bis 15 MHz emittiert, wenn es eingeschaltet wird.

14. Vorrichtung nach einem der Ansprüche 10 bis 12, wobei die Vorrichtung (1) ein Modul (4) zum Emittieren von mehr als einer spezifischen Frequenz im Bereich von 1 MHz bis 15 MHz umfasst.

15. Vorrichtung nach einem der Ansprüche 10 bis 14, die des Weiteren ein Verbindungsmittel für eine Solarzelle oder ein Solarpaneel umfasst.

16. Verwendung einer Vorrichtung nach einem der Ansprüche 10 bis 15 in einem Verfahren gemäß einem der Ansprüche 1 bis 9 zur Beschleunigung der Blattbildung von Pflanzen, zur Stimulation der Samenkeimung, zur Stimulation der Wurzelbildung von Pflanzen, zur Beschleunigung der Farbbildung von Pflanzen, zur Stimulation der Triebbildung von Pflanzen, zur Steigerung des Trockenmaterialgehalts von Pflanzen oder zur Stimulation des kompakten Wachstums von Pflanzen.

## Revendications

1. Procédé pour diriger le développement d'une plante, le procédé comprenant l'application d'une énergie d'onde radio avec une fréquence dans la plage de 1 MHz à 15 MHz à une plante à partir d'un dispositif (1) comprenant une alimentation électrique (2) et un boîtier (3), le boîtier (3) abritant un module (4) pour la transmission d'onde radio, le module (4) comprenant un moyen d'entrée de fréquence (5), un émetteur (6) pour appliquer une fréquence dans la plage de 1 MHz à 15 MHz à une antenne (7), et une antenne intégrée (7) pour émettre des ondes radio à une fréquence dans la plage de 1 MHz à 15 MHz.

2. Procédé selon la revendication 1, le dispositif générant un champ électrique dans la plage de 0.5 à 1.5 V/m, mesuré à moins de 10 cm du dispositif.

3. Procédé selon la revendication 1 ou 2, la fréquence étant dans la plage de 3 MHz à 8 MHz ou entre 10 MHz et 14 MHz.

4. Procédé selon l'une quelconque des revendications 1 à 3, la plante faisant partie des *Alliaceae, Araceae, Asparagaceae, Aspiaceae, Asphodelaceae, Asteraceae, Araucariaceae, Brassicaceae, Bromeliaceae, Bromelioideae, Buxaceae, Cichorioideae, Coniferae, Cucurbitaceae, Fabaceae, Gentianaceae, Iridaceae, Leguminosae, Liliaceae, Marantaceae, Marasmiaceae, Orchidaceae, Pleurotaceae, Pinaceae, Poaceae, Bambusoideae, Panicoideae, Rosaceae, Rutaceae, Solanaceae, Taxaceae, Tuberacea, Vandeae, Vitacea* ou *Xanthorrhœaceae* ou un membre du groupe des *Rhodophyta, Chlorophyta, Ochrophyta, Phaeophyceae* ou *Cyanophyta.*

5. Procédé selon l'une quelconque des revendications 1 à 4, le procédé étant un procédé d'augmentation du rendement en poids sec, de stimulation de la formation des feuilles, de stimulation de la maturation des graines, de stimulation du développement des racines, de stimulation de la couleur des feuilles, de stimulation de la formation des fleurs ou de stimulation de la croissance compacte d'une plante.

6. Procédé selon l'une quelconque des revendications 1 à 5, l'énergie des ondes radio étant appliquée pendant une période dans la plage de 5 jours à 24 semaines, ce qui entraîne une augmentation du rendement en poids sec, une augmentation de la formation des feuilles, une augmentation de la maturation des graines, une augmentation du développement des racines, une augmentation de la couleur des feuilles ou une augmentation des bourgeons floraux, par rapport à une plante similaire à laquelle l'énergie des ondes radio n'a pas été appliquée.

7. Procédé selon l'une quelconque des revendications 1 à 6, une ou plusieurs fréquences dans la plage de 3.500 MHz à 3.750 MHz, de 3.750 MHz à 4.500 MHz, de 4.500 MHz à 5.000 MHz, de 5.500 MHz à 7.000 MHz ou de 7.500 MHz à 14.000 MHz étant appliquées.

8. Procédé selon l'une quelconque des revendications 1 à 7, une ou plusieurs fréquences dans la plage de 6.000 MHz à 7.500 MHz étant appliquées, ce qui a pour effet de stimuler la formation des racines.

9. Procédé selon l'une quelconque des revendications 1 à 8, une ou plusieurs fréquences dans la plage de 3.750 MHz à 5.000 MHz étant appliquées, ce qui permet de stimuler la formation des feuilles.

10. Dispositif destiné à être utilisé dans un procédé selon l'une quelconque des revendications 1 à 9, le dispositif (1) comprenant une alimentation électrique (2) et un boîtier (3), le boîtier (3) abritant un module (4) de transmission d'ondes radio, le module (4) comprenant un moyen d'entrée de fréquence (5), un émetteur (6) pour appliquer une fréquence dans la plage de 1 MHz à 15 MHz à une antenne (7), et une antenne intégrée (7) pour émettre des ondes radio avec une fréquence dans la plage de 1 MHz à 15 MHz.

11. Dispositif selon la revendication 10, le dispositif comprenant deux modules (4) ou plus.

12. Dispositif selon la revendication 10 ou 11, le dispositif comprenant au moins un module (4) pour émettre une fréquence spécifique dans la plage de 1 MHz à 15 MHz.

13. Dispositif selon la revendication 12, chaque module (4) émettant une fréquence spécifique dans la plage de 1 MHz à 15 MHz lorsqu'il est allumé.

14. Dispositif selon l'une quelconque des revendications 10 à 12, le dispositif (1) comprenant un module (4) pour émettre plus d'une fréquence spécifique dans la plage de 1 MHz à 15 MHz.

15. Dispositif selon l'une quelconque des revendications 10 à 14, qui comprend en outre un moyen de connexion pour une cellule solaire ou un panneau solaire.

16. Utilisation d'un dispositif selon l'une quelconque des revendications 10 à 15 dans un procédé selon l'une quelconque des revendications 1 à 9 pour accélérer la formation des feuilles des plantes, pour stimuler la germination des graines, pour stimuler la formation des racines des plantes, pour accélérer la formation des couleurs des plantes, pour stimuler la formation des pousses des plantes, pour augmenter la teneur en matière sèche des plantes ou pour stimuler la croissance compacte des plantes.
